**Europäisches Patentamt**

(19) **European Patent Office**

**Office européen des brevets**

(11) Numéro de publication: **0 091 857**
**B1**

(12) # FASCICULE DE BREVET EUROPEEN

(45) Date de publication du fascicule du brevet:
**27.08.86**

(51) Int. Cl.⁴: **F 16 B 21/20,** F 16 B 39/02

(21) Numéro de dépôt: **83400669.4**

(22) Date de dépôt: **31.03.83**

(54) **Dispositif d'arrêt d'une pièce sur un axe.**

(30) Priorité: **01.04.82 FR 8205659**

(43) Date de publication de la demande:
**19.10.83 Bulletin 83/42**

(45) Mention de la délivrance du brevet:
**27.08.86 Bulletin 86/35**

(84) Etats contractants désignés:
**DE GB IT**

(56) Documents cités:
**FR - A - 1 031 916**
**US - A - 2 697 621**

**Industrial Fasteners Handbook, 2nd Edition, pp. 345-349**

(73) Titulaire: **AUTOMOBILES CITROEN, 62 Boulevard Victor-Hugo, F-92200 Neuilly-sur-Seine (FR)**
Titulaire: **AUTOMOBILES PEUGEOT, 75, avenue de la Grande Armée, F-75116 Paris (FR)**

(72) Inventeur: **Buvat, Irénée, 57, rue Clisson, F-75013-Paris (FR)**

(74) Mandataire: **Fabien, Henri et al, PEUGEOT SA. DAT / BPI 18, rue des Fauvelles, F-92250 La Garenne-Colombes (FR)**

ACTORUM AG

## Description

L'invention est relative à un moyen d'immobilisation permettant de bloquer un axe dans l'alésage d'une pièce et elle a pour but de réaliser un tel moyen d'une façon simple et pratique.

Un moyen d'immobilisation conforme à l'état de la technique est du type dans lequel au moins un élément de ruban élastique de forme ondulée s'interpose entre la surface d'une portée cylindrique réalisée sur l'axe d'un diamètre égal ou inférieur à celui de l'axe et la surface d'un alésage d'un diamètre égal ou supérieur à celui de l'alésage de la pièce recevant l'axe.

Un tel élément de ruban élastique réalise en métal est connu par le livre «Industrial Fasteners Handbook, second Edition, pages 345-349». Ce type d'élément n'assure pas un arrêt positif de la pièce contre une éventuelle rotation.

A cet effet l'invention propose un moyen d'immobilisation d'un axe dans l'alésage d'une pièce le recevant, constitué d'au moins un élément de ruban élastique de forme ondulée en métal ou en matière synthétique s'interposant entre la surface d'une portée cylindrique réalisée sur l'axe d'un diamètre égal ou inférieur à celui de l'axe et la surface d'un alésage d'un diamètre égal ou supérieur à celui de l'alésage de la pièce recevant l'axe, ruban dont les deux extrémités sont munies d'arêtes vives participant à l'immobilisation positive des deux pièces en s'imprimant respectivement dans les surfaces de l'axe et de l'alésage de la pièce.

D'autres caractéristiques de l'invention apparaîtront au cours de la description qui va suivre, faite en se référant aux dessins annexés donnés uniquement à titre d'exemple et dans lesquels:

La fig. 1 représente le moyen d'immobilisation vu de profil.

La fig. 2 est une vue suivant F1 de la figure 1.

La fig. 3 est une vue suivant F2 de la figure 1.

La fig. 4 représente le moyen mis en place.

La fig. 5 est une coupe suivant A de la figure 4.

La fig. 6 est une variante de la réalisation du moyen d'immobilisation.

La fig. 7 représente le moyen de la figure 6 mis en place.

La fig. 8 est une deuxième variante de réalisation du moyen d'immobilisation.

La fig. 9 représente une pièce composée de deux moyens d'immobilisation solidarisés par un élément de liaison.

La fig. 10 représente le moyen de la figure 9 mis en place.

La fig. 11 représente un cas d'application particulière du moyen d'immobilisation sur un ensemble fileté.

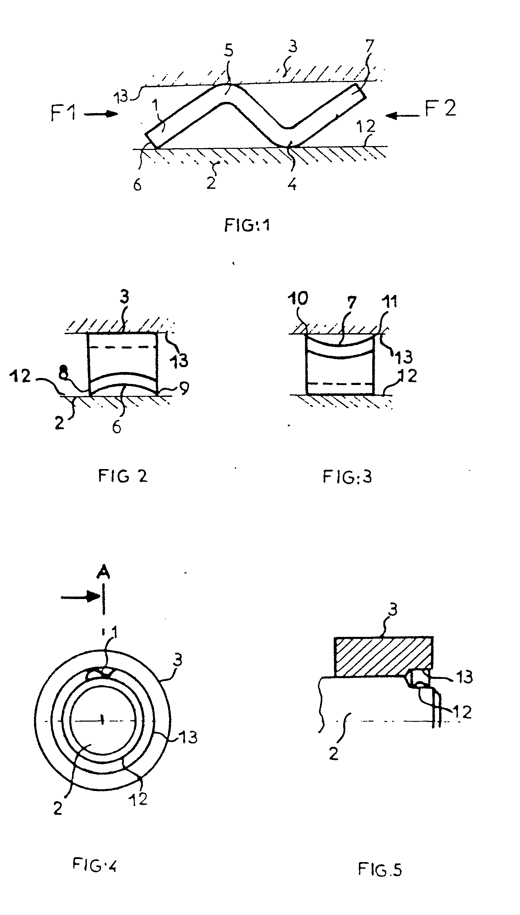

Suivant les figures 1, 2, 3 le moyen d'immobilisation 1, objet de l'invention, est intercalé entre les pièces 2 et 3 et prend appui sur les surfaces 12, 13 qui sont les surfaces d'une portée réalisée sur la pièce 2 et d'un alésage de la pièce 3. Le moyen d'immobilisation prend appui sur les surfaces 12 et 13 par ses plis 4 et 5, ce qui crée grâce à son élasticité, un effort suffisant pour imprimer les picots 8, 9, 10, 11 de ses extrémités 6 et 7 respectivement dans les surfaces 12 et 13.

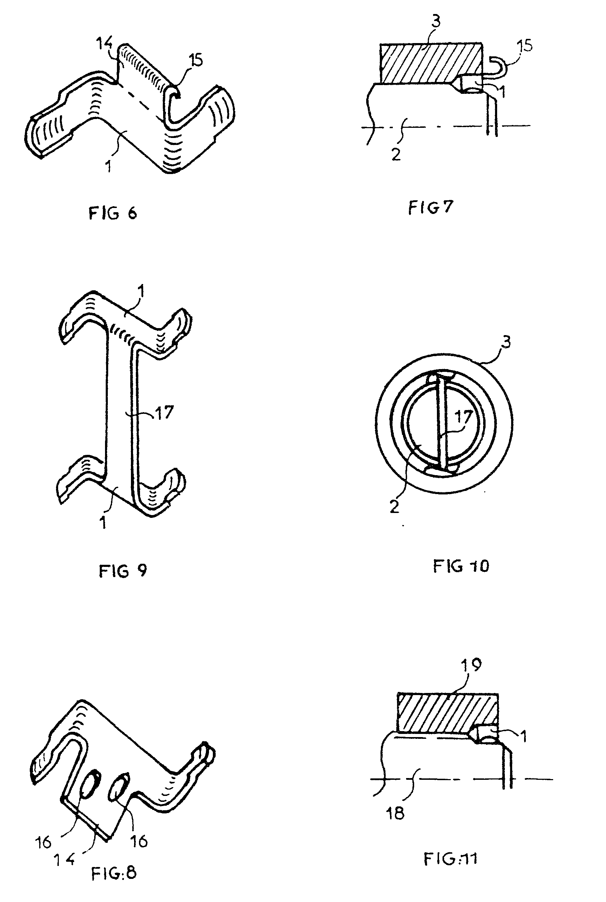

Les figures 4 et 5 montrent comment le moyer. 1 s'interpose entre la surface 12 de la portée de l'axe et la surface 13 de l'alésage.

Dans la variante des figures 6, 7 le moyen 1 est muni d'une extension 14, qui peut être recourbée en 15 pour faciliter son extraction.

Dans le même but, dans la variante de la figure 8 le moyen 1 qui est porteur de l'extension 14 est muni de deux ouvertures 16.

Dans les figures 9, 10, les deux moyens 1 sont solidaires d'une liaison 17, l'ensemble ainsi fermé peut être obtenu facilement par emboutissage.

La liaison 17 permet, par pression ou chocs, la mise en place ou le retrait simultané de deux éléments 1.

La figure 11 représente un cas particulier d'utilisation dans lequel l'élément 1 est utilisé pour bloquer un écrou 19 sur une tige filetée 18.

Au vu des différentes réalisation présentées ci-dessus, il apparait que l'élément d'immobilisation 1 mis en place par des moyens de pression ou des chocs, peut grâce à son élasticité liée à sa forme, s'introduire facilement entre les surfaces 12 et 13 et la mise en contrainte résultant des appuis des plis 4, 5 imprimé les picots 8, 9 et 10, 11 dans les surfaces 12, 13. L'axe 2 est ainsi immobilisé axialement et en rotation par rapport à la pièce 3.

Tout mouvement relatif entre les pièces 2 et 3 tend à ancrer plus profondément les picots 8, 9, 10, 11 et par suite à affirmer l'immobilisation des pièces 2 et 3.

## Revendications

1. Moyen d'immobilisation d'un axe (2) dans l'alésage d'une pièce (3) le recevant, constitué d'au moins un élément de ruban élastique (1) de forme ondulée en métal ou en matière synthétique s'interposant entre la surface (12) d'une portée cylindrique réalisée sur l'axe (2) d'un diamètre égal ou inférieur à celui de l'axe et la surface (13) d'un alésage d'un diamètre égal ou supérieur à celui de l'alésage de la pièce (3) recevant l'axe (2), ruban (1) dont les deux extrémités (6, 7) sont munies d'arêtes vives participant à l'immobilisation positive des deux pièces (2, 3) en s'imprimant respectivement dans les surfaces (12) de l'axe (2) et (13) de l'alésage de la pièce (3).

2. Elément de ruban élastique suivant revendication 1, caractérisé en ce que ses extrémités (6, 7) sont embouties en forme d'arc et contiennent des picots (8, 9, 10, 14) qui viennent s'imprimer d'une part dans la surface de la portée cylindrique de l'axe, et d'autre part dans la surface de l'alésage de la pièce recevant l'axe et en ce qu'au moins deux parties courbes (4, 5) prennent appui sur lesdites surfaces.

3. Elément de ruban élastique suivant revendication 2, caractérisé en ce qu'il porte une extension (14) destinée à son extraction.

4. Elément de ruban élastique suivant revendication 3, caractérisé en ce que l'extension (14) est recourbée (en 15).

5. Elément de ruban élastique suivant revendication 3, caractérisé en ce que l'extension 14 est munie d'au moins une ouverture (16) facilitant la préhension.

6. Elément de ruban élastique suivant revendication 2, caractérisé en ce qu'il peut être associé à au moins un autre élément de même type par une liaison (17).

## Patentansprüche

1. Einrichtung zum Festlegen einer Achse (2) in der Bohrung eines sie aufnehmenden Teils (3), bestehend aus wenigstens einem elastischen gewellten Bandelement (1) aus Metall oder Kunststoff zwischen der Oberfläche (12) eines auf der Achse (2) ausgebildeten zylindrischen Sitzes, dessen Durchmesser gleich oder kleiner als derjenige der Achse ist, und der Oberfläche (13) einer Bohrung, deren Durchmesser gleich oder grösser als derjenige der Bohrung des die Achse (2) aufnehmenden Teils (3) ist, wobei die beiden Enden (6, 7) des Bands (1) mit scharfen Graten versehen sind, die an der zwangsläufigen Festlegung der beiden Teile (2, 3) dadurch teilnehmen, dass sie sich in die Oberflächen (12 und 13) der Achse (2) bzw. der Bohrung des Teils (3) eindrükken.

2. Elastisches Bandelement nach Anspruch 1, dadurch gekennzeichnet, dass seine Enden (6, 7) bogenförmig gepresst sind und Zacken (8, 9, 10, 14) aufweisen, die sich einerseits in die Oberfläche des zylindrischen Sitzes der Achse und andererseits in die Oberfläche der die Achse aufnehmenden Bohrung eindrücken und dass wenigstens zwei gekrümmte Teile an den Oberflächen anliegen.

3. Elastisches Bandelement nach Anspruch 2, dadurch gekennzeichnet, dass es einen zu seinem Herausziehen bestimmten Fortsatz (14) aufweist.

4. Elastisches Bandelement nach Anspruch 3, dadurch gekennzeichnet, dass der Fortsatz (14) bei (15) umgebogen ist.

5. Elastisches Bandelement nach Anspruch 3, dadurch gekennzeichnet, dass der Fortsatz (14) mit wenigstens einer das Ergreifen erleichternden Öffnung (16) versehen ist.

6. Elastisches Bandelement nach Anspruch 2, dadurch gekennzeichnet, dass es mit wenigstens einem weiteren Element derselben Bauart durch eine Verbindung (17) verbunden werden kann.

## Claims

1. Means of immobilising a spindle (2) in the bore of a member (3) receiving the same, comprising at least one resilient strip element (1) of undulate form, of metal or synthetic material, interposed between the surface (12) of a cylindrical bearing formed on the spindle (2) of a diameter equal to or smaller than that of the spindle and the surface (13) of a bore having a diameter equal to or greater than that of the bore of the member (3) receiving the spindle (2), being a strip (1) of which the two extremities (6, 7) are provided with sharp edges participating in the positive immobilisation of the two members (2, 3) by being impressed, respectively, into the surfaces (12) of the spindle (2) and (13) of the bore of the member (3).

2. Resilient strip element according to claim 1, characterised in that its extremities (6, 7) are shaped in arcuate form and contain barbs (8, 9, 10, 14) which are caused on the one hand to impress into the surface of the cylindrical bearing of the spindle, and on the other hand into the surface of the bore of the member receiving the spindle and in that at least two curved sections (4, 5) bear on the said surfaces.

3. Resilient strip element according to claim 2, characterised in that it carries an extension (14) intended for its withdrawal.

4. Resilient strip element according to claim 3, characterised in that the extension (14) is bent back at (15).

5. Resilient strip element according to claim 3, characterised in that the extension (14) is provided with at least one opening (16) facilitating gripping.

6. Resilient strip element according to claim 2, characterised in that it may be associated with at least one other element of the same kind, by means of a connection (17).

FIG:1

FIG 2

FIG:3

FIG·4

FIG.5

FIG 6

FIG 7

FIG 9

FIG 10

FIG:8

FIG:11